# EUROPÄISCHE PATENTSCHRIFT

(11) **EP 3 313 779 B1**
(45) Veröffentlichungstag und Bekanntmachung des Hinweises auf die Patenterteilung: **24.04.2019**
(21) Anmeldenummer: 16734313.6
(22) Anmeldetag: 29.06.2016
(51) Int. Cl.: C01B 3/50, F25J 3/02

(54) **VERFAHREN UND ANLAGE ZUR GEWINNUNG VON WASSERSTOFF AUS EINEM WASSERSTOFF UND KOHLENWASSERSTOFFE ENTHALTENDEN EINSATZGEMISCH**
METHOD AND INSTALLATION FOR THE PRODUCTION OF HYDROGEN FROM A FEED CONTAINING HYDROGEN AND HYDROCARBONS
PROCEDE ET INSTALLATION DE PRODUCTION D'HYDROGENE A PARTIR UN MELANGE DE CHARGE CONTENANT UN HYDROGENE ET DES HYDROCARBURES

(30) Priorität: 29.06.2015 EP 15174308
(43) Veröffentlichungstag der Anmeldung: 02.05.2018
(73) Patentinhaber: Linde AG, 80331 München (DE)
(72) Erfinder: PHAM DUC, Tuat, 82377 Penzberg (DE); KUHN, Paul, 82065 Baierbrunn (DE)
(86) Internationale Anmeldenummer: PCT/EP2016/065197
(87) Internationale Veröffentlichungsnummer: WO 2017/001514

(56) Entgegenhaltungen:
- EP-A1- 0 029 678
- WO-A1-99/35110
- CN-A- 103 449 950
- FR-A1- 2 463 758
- US-A1- 2012 151 962

## Beschreibung

Die Erfindung betrifft ein Verfahren und eine Anlage zur Gewinnung von Wasserstoff aus einem Wasserstoff, Methan und Kohlenwasserstoffe mit zwei Kohlenstoffatomen enthaltenden und an sonstigen Kohlenwasserstoffen armen oder freien Einsatzgemisch gemäß den Oberbegriffen der unabhängigen Patentansprüche.

### Stand der Technik

Verfahren und Vorrichtungen zum Dampfspalten (engl. Steam Cracking) von Kohlenwasserstoffen sind bekannt und beispielsweise im Artikel "Ethylene" in Ullmann's Encyclopedia of Industrial Chemistry, online seit 15. April 2007, DOI 10.1002/14356007.a10_045.pub2, beschrieben.

Beim Dampfspalten werden Gasgemische erhalten, die nach der Abtrennung von Wasser und ölartigen Bestandteilen, falls vorhanden (sogenanntem Pyrolyseöl), noch im Wesentlichen Wasserstoff, Methan und Kohlenwasserstoffe mit zwei und mehr Kohlenstoffatomen enthalten. Derartige Gasgemische können in unterschiedlichen Trennsequenzen aufgetrennt werden, wie sie dem Fachmann grundsätzlich bekannt und ebenfalls in dem erwähnten Artikel beschrieben sind.

Die vorliegende Erfindung betrifft dabei die trenntechnische Behandlung von in derartigen Trennsequenzen anfallenden Gasgemischen, die Wasserstoff, Methan und Kohlenwasserstoffe mit zwei Kohlenstoffatomen enthalten und arm an oder frei von sonstigen Kohlenwasserstoffen sind. Derartige Gasgemische können beispielsweise in sogenannten Deethanizern gewonnen und in sogenannten Demethanizern weiter bearbeitet werden. In einem Demethanizer wird Methan zunächst zusammen mit Wasserstoff von den schwereren Komponenten, also den Kohlenwasserstoffen mit zwei Kohlenstoffatomen, getrennt.

Die Kohlenwasserstoffe mit zwei Kohlenstoffatomen umfassen, da Acetylen typischerweise stromauf oder stromab des Demethanizers hydriert wird, noch überwiegend oder ausschließlich Ethan und Ethylen. In einem sogenannten C2-Splitter kann das anschließend typischerweise zum Dampfspalten zurückgeführte Ethan von dem als Produkt ausgeführten Ethylen abgetrennt werden.

Wie ebenfalls aus der zitierten Literatur bekannt, können Demethanizer bei unterschiedlichen Drücken betrieben werden und werden entsprechend als Low-Pressure-(LP-), Medium-Pressure-(MP-) und High-Pressure-(HP-)Demethanizer (Hoch-, Mittel- und Niederdruckdemethanizer) bezeichnet. Der Einsatz von Niederdruckdemethanizern ist grundsätzlich wünschenswert, da sich bei den hier verwendeten Drücken von typischerweise weniger als 15 bar aufgrund der günstigeren Gleichgewichtslagen zwischen gasförmigem und flüssigem Zustand der beteiligten Komponenten eine einfachere Trennung mit deutlich geringeren Bodenzahlen ergibt. Aufgrund der generell niedrigeren Drücke können ferner weniger druckfeste, und damit günstigere, Konstruktionen gewählt werden.

Neben Olefinen wie Ethylen gewinnt Wasserstoff als Produkt entsprechender Verfahren zunehmend an Bedeutung. Wasserstoff, insbesondere Reinwasserstoff, kann beispielsweise in Raffinerien zur Hydrierungszwecken eingesetzt werden und besitzt teilweise einen höheren Marktwert als die klassische Zielverbindung des Dampfspaltens, das Ethylen.

Beim Einsatz von Niederdruckdemethanizern kann jedoch die Gewinnung des Wasserstoffs aus einem entsprechenden, Wasserstoff, Methan und Kohlenwasserstoffe mit zwei Kohlenstoffatomen enthaltenden Gasgemisch zu Problemen führen, wie auch unten im Detail erläutert. Zusätzliche Probleme können in diesem Zusammenhang insbesondere dann auftreten, wenn beim Dampfspalten Kohlenwasserstoffe oder Kohlenwasserstoffgemische eingesetzt werden, die zur Bildung von vergleichsweise geringen Mengen Methan führen.

Die CN 103449950 A offenbart ein Demethanisierungsverfahren. Dieses Verfahren umfasst, ein Einsatzgemisch abzukühlen und dadurch Kondensate zu bilden. Nicht kondensierte Anteile des Einsatzgemischs werden einer Gegenstromabsorption unterworfen. Die Kondensate und eine sich bei der Gegenstromabsorption bildende Flüssigkeit werden in einer Demethanizersäule getrennt. Um eine Absorptionsflüssigkeit für die Gegenstromabsorption bereitzustellen, wird ein Fluid auf ein Temperaturniveau deutlich unter jenem, auf das die nicht kondensierten Anteile des Einsatzgemischs abgekühlt und in die Gegenstromabsorption eingespeist werden, abgekühlt. Die erforderliche Kühlkapazität wird durch Expansionskühlung unter Verwendung eines Turboexpanders bereitgestellt. Dies wird als nachteilig angesehen.

Es besteht daher der Bedarf nach verbesserten Verfahren zur Gewinnung von Wasserstoff aus Wasserstoff, Methan und Kohlenwasserstoffe mit zwei Kohlenstoffatomen enthaltenden Gasgemischen, die arm an oder frei von sonstigen Kohlenwasserstoffatomen sind, unter Einsatz von Niederdruckdemethanizern.

### Offenbarung der Erfindung

Diese Aufgabe wird durch ein Verfahren und eine Anlage zur Gewinnung von Wasserstoff aus einem, insbesondere gasförmigen, Wasserstoff, Methan und Kohlenwasserstoffe mit zwei Kohlenstoffatomen enthaltenden und an sonstigen Kohlenwasserstoffen armen oder freien Einsatzgemisch mit den Merkmalen der unabhängigen Patentansprüche gelöst. Bevorzugte Ausgestaltungen sind Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Flüssige und gasförmige Ströme können im hier verwendeten Sprachgebrauch reich oder arm an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann. Der Begriff "überwiegend" kann der Definition von "reich" entsprechen. Flüssige und gasförmige Ströme können im hier verwendeten Sprachgebrauch ferner angereichert oder abgereichert an einer oder mehreren Komponenten sein, wobei sich diese Begriffe auf einen entsprechenden Gehalt in einem Ausgangsgemisch beziehen, aus dem der flüssige oder gasförmige Strom erhalten wurde. Der flüssige oder gasförmige Strom ist "angereichert", wenn dieser zumindest den 1,1-fachen, 1,5-fachen, 2-fachen, 5-fachen, 10-fachen, 100-fachen oder 1.000-fachen Gehalt, "abgereichert", wenn er höchstens den 0,9-fachen, 0,5-fachen, 0,1-fachen, 0,01-fachen oder 0,001-fachen Gehalt einer entsprechenden Komponente, bezogen auf das Ausgangsgemisch, enthält. Ist vorliegend beispielsweise von "Methan" oder "Wasserstoff' die Rede, sei darunter ein Strom verstanden, der reich an der entsprechenden Komponente ist, jedoch nicht ausschließlich aus dieser bestehen muss.

Ein flüssiger oder gasförmiger Strom ist von einem anderen flüssigen oder gasförmigen Strom (auch als Ausgangsstrom bezeichnet) "abgeleitet", wenn er zumindest einige in dem Ausgangsstrom enthaltene oder aus diesem erhaltene Komponenten aufweist. Ein in diesem Sinne abgeleiteter Strom kann aus dem Ausgangsstrom durch Abtrennen oder Abzweigen eines Teilstroms oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen und dergleichen erhalten werden. Ist hier davon die Rede, dass "Fluid" eines Gemischs auf bestimmte Weise behandelt wird, so ist darunter zu verstehen, dass das gesamte Gemisch oder auch nur ein Teil davon einer entsprechenden Behandlung unterzogen werden kann.

Im Rahmen der vorliegenden Erfindung können Destillationssäulen und Absorptionskolonnen zum Einsatz kommen. Zur Auslegung und Ausgestaltung entsprechender Vorrichtungen sei auf einschlägige Lehrbücher verwiesen (siehe beispielsweise K. Sattler: Thermische Trennverfahren. Grundlagen, Auslegung, Apparate. Weinheim: Wiley-VCH, 3. Auflage 2001). Einer Destillationssäule und einer Absorptionskolonne ist typischerweise immer zumindest eine flüssige Fraktion ("Sumpfflüssigkeit") und eine gasförmige Fraktion ("Kopfgas") in einem unteren ("Sumpf") bzw. oberen Bereich ("Kopf") entnehmbar.

Bei einer "Destillationssäule" handelt es sich im hier verwendeten Sprachgebrauch um eine Trennsäule, die dafür eingerichtet ist, ein gasförmig oder flüssig oder in Form eines Zweiphasengemischs mit flüssigen und gasförmigen Anteilen, ggf. auch im überkritischen Zustand, bereitgestelltes Stoffgemisch (Fluid) zumindest teilweise aufzutrennen, also aus dem Stoffgemisch jeweils Reinstoffe oder Stoffgemische zu erzeugen, die gegenüber dem Stoffgemisch bezüglich zumindest einer Komponente angereichert bzw. abgereichert oder reich bzw. arm im oben erläuterten Sinne sind. Typischerweise sind Destillationssäulen als zylindrische Metallbehälter ausgebildet, die mit Einbauten, beispielsweise Siebböden oder geordneten oder ungeordneten Packungen, ausgerüstet sind. Eine Destillationssäule zeichnet sich unter anderem dadurch aus, dass das Sumpfprodukt mittels eines Sumpfverdampfers erwärmt wird, so dass kontinuierlich ein Teil verdampft und in der Destillationssäule gasförmig aufsteigt. Eine Destillationssäule ist ferner typischerweise mit einem sogenannten Kopfkondensator versehen, in den zumindest ein Teil des Kopfgases zu einem Kondensat verflüssigt und als flüssiger Rücklauf am Kopf der Destillationssäule aufgegeben wird. Ein Teil des Kopfgases kann aber auch anderweitig, beispielsweise als Produkt, verwendet werden.

Im Gegensatz zu einer Destillationssäule verfügt eine "Absorptionskolonne" typischerweise nicht über einen Sumpfverdampfer. Auch Absorptionskolonnen sind aus dem Bereich der Trenntechnik allgemein bekannt. Absorptionskolonnen werden zur Absorption im Phasengegenstrom verwendet und daher auch als Gegenstromkolonnen bezeichnet. Bei der Absorption im Gegenstrom strömt die abgebende Gasphase aufwärts durch eine Absorptionskolonne. Die aufnehmende Lösungsphase fließt, von oben aufgegeben und unten abgezogen, der Gasphase entgegen. Die Gasphase wird mit der Lösungsphase "gewaschen". In einer entsprechenden Absorptionskolonne sind ebenfalls typischerweise Einbauten vorgesehen, die für einen stufenweisen (Böden, Sprühzonen, rotierende Teller usw.) oder stetigen (regellose Schüttungen von Füllkörpern, Packungen usw.) Phasenkontakt sorgen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10%, 20% oder sogar 50% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

### Vorteile der Erfindung

Es sei ausdrücklich betont, dass die vorliegende Erfindung ihre besonderen Vorteile in Verfahren zur trenntechnischen Behandlung von Wasserstoff, Methan und Kohlenwasserstoffen mit zwei Kohlenstoffatomen enthaltenden Gasgemischen entfaltet, bei denen ein eingangs erläuterter Niederdruckdemethanizer zum Einsatz kommt. Während einem Hochdruckdemethanizer typischerweise am Kopf eine methanreiche Flüssigkeit entnommen werden kann, welche sich als Rücklauf in einer Absorptionskolonne eignet, ist dies in Niederdruckdemethanizern nicht der Fall.

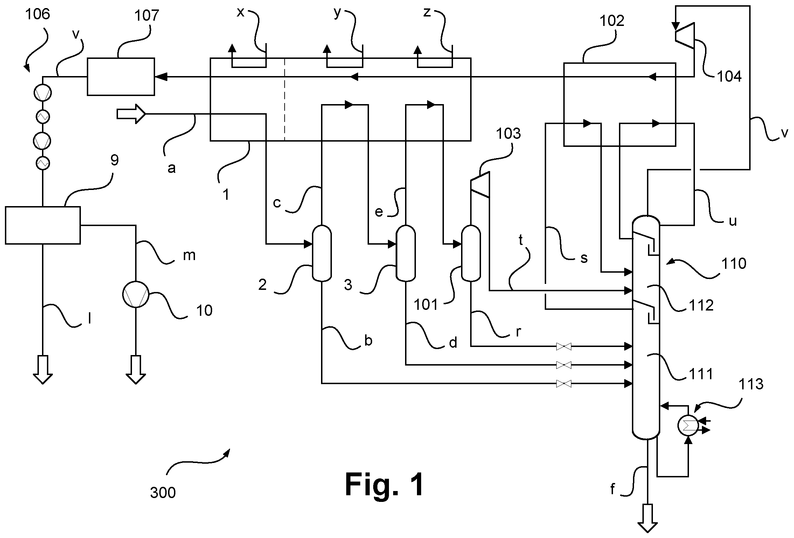

Wie auch nachfolgend unter Bezugnahme auf die Figur 1 erläutert, ist es beim Einsatz von Niederdruckdemethanizern herkömmlicherweise erforderlich, zusätzliche Kälte zu generieren, beispielsweise durch Entspannung eines Kopfgases des Niederdruckdemethanizers und/oder eines nicht kondensierten Restgases, wozu bekannte Turboexpander eingesetzt werden können.

Insbesondere in Kombination mit einer zur Herstellung von Reinwasserstoff verwendeten Druckwechseladsorption erweist sich dies jedoch als großer Nachteil. Zwar ermöglicht es die zusätzliche Kälteproduktion durch Entspannung der genannten Ströme, aus einem Kopfgas eines Niederdruckdemethanizers eine Flüssigkeit zu erzeugen, die als Rücklauf auf eine Absorptionskolonne aufgegeben werden kann, das entspannte Gas muss jedoch vor der Druckwechseladsorption wieder aufwendig rückverdichtet werden. Insgesamt sind herkömmlicherweise ein oder zwei Turboexpander und eine ein- oder mehrstufige Verdichteranordnung erforderlich.

Insbesondere drehende Maschine erweisen sich jedoch typischerweise in entsprechenden Verfahren als nachteilig, da ein bedeutender Anteil der bei der trenntechnischen Behandlung entsprechender Gasgemische erforderlichen Energie zu deren Betrieb aufgewendet werden muss. Die Turobexpander, die zur zusätzlichen Kälteerzeugung eingesetzt werden, sind wartungsanfällig und bedürfen einer kontinuierlichen Überwachung. An diesem Punkt setzt die vorliegende Erfindung an.

Die Erfindung schlägt dabei ein Verfahren zur Gewinnung von Wasserstoff aus einem insbesondere gasförmigen, an Wasserstoff, Methan und Kohlenwasserstoffen mit zwei Kohlenstoffatomen reichen bzw. Wasserstoff, Methan und Kohlenwasserstoffe mit zwei Kohlenstoffatomen enthaltenden und an sonstigen Kohlenwasserstoffen armen oder freien Einsatzgemisch vor. Ein entsprechendes Einsatzgemisch wird, wie eingangs erläutert, beispielsweise aus einem Produktgemisch eines Dampfspaltverfahrens gebildet, kann grundsätzlich jedoch auch aus anderen Quellen stammen. Insbesondere wurde ein Einsatzgemisch im Rahmen der vorliegenden Erfindung bereits von Komponenten befreit, die gegebenenfalls beim Einsatz tiefer Temperaturen stören, insbesondere von Wasser und Kohlendioxid. Ferner enthält das Einsatzgemisch im Rahmen der vorliegenden Erfindung wenige oder keine Kohlenwasserstoffe mit drei und mehr Kohlenstoffatomen. Bei den Kohlenwasserstoffen mit zwei Kohlenstoffatomen kann es sich überwiegend um Ethan und Ethylen handeln, auch Acetylen kann jedoch in einem derartigen Einsatzgemisch vorhanden sein, insbesondere wenn, beispielsweise nach einem Dampfspaltverfahren, keine Hydrierung entsprechender Verbindungen durchgeführt wurde.

Im Rahmen der vorliegenden Erfindung wird Fluid eines derartigen Einsatzgemischs auf einem ersten Druckniveau derart von einem ersten Temperaturniveau auf ein zweites Temperaturniveau abgekühlt, dass unter Verbleib eines Restgases ein oder mehrere Kondensate aus dem Fluid des Einsatzgemischs abgeschieden werden. In dieser Beziehung unterscheidet sich das erfindungsgemäße Verfahren nicht nennenswert von Verfahren des Standes der Technik. Insbesondere ist in derartigen Verfahren bekannt, ein entsprechendes Einsatzgemisch mehrstufig abzukühlen, beispielsweise unter Verwendung von C2-Kältemitteln, insbesondere von Ethylen. Hierbei erfolgt eine Abkühlung beispielsweise zunächst mit Ethylen auf ca. -57 °C, wobei ein erstes Kondensat abgeschieden wird. Ein gasförmig verbleibender Rest (Restgas) wird anschließend mit Ethylen auf ca. -80 °C weiter abgekühlt und ein weiteres Kondensat wird abgeschieden. Herkömmlicherweise wird, wie zu Figur 1 erläutert, ein weiteres Kondensat nach nochmaligem Abkühlen des auch hier gasförmig verbleibenden Rests auf ca. -100 °C abgeschieden.

Im Rahmen der vorliegenden Erfindung wird die Temperatur der letzten Abkühlstufe, bei der ein Kondensat aus einem entsprechenden Einsatzgemisch abgeschieden wird, auf dem jedoch noch keine Trenneinrichtungen zum Einsatz kommen, in denen weitere Ströme zugespeist werden, als "zweites Temperaturniveau" bezeichnet, die Temperatur, bei der das Einsatzgemisch der Abkühlung zugeführt wird, hingegen als "erstes Temperaturniveau". Das erste Temperaturniveau liegt insbesondere bei -35 bis -45 °C, die weiteren Temperaturniveaus werden unten erläutert.

Das auf dem zweiten Temperaturniveau gasförmig verbleibende Restgas wird weiter auf ein drittes Temperaturniveau abgekühlt und unter Erhalt eines an Wasserstoff und Methan reichen Kopfgases und einer Sumpfflüssigkeit einer Gegenstromabsorption unterworfen. Fluid des oder der bei der Abkühlung gebildeten Kondensate und/oder Sumpfflüssigkeit aus der Gegenstromabsorption wird auf ein zweites Druckniveau entspannt und auf diesem zweiten Druckniveau einem Niederdruckdemethanizer zugeführt. Wie erwähnt, wird im Rahmen der vorliegenden Anmeldung unter einem "Niederdruckdemethanizer" ein Demethanizer verstanden, der bei einem niedrigen Druck, typischerweise auf einem Druckniveau von 10 bis 25 bar, betrieben wird. Erfindungsgemäß ist vorgesehen, die Gegenstromabsorption auf dem ersten Druckniveau und unter Verwendung von Fluid durchzuführen, das dem Niederdruckdemethanizer auf den zweiten Druckniveau entnommen, in gasförmigem Zustand auf das erste Druckniveau verdichtet und auf das dritte Temperaturniveau abgekühlt wird.

In anderen Worten wird gemäß der vorliegenden Erfindung eine Absorptionsslösung bzw. Absorptionsflüssigkeit, die als die absorbierende Phase in der Gegenstromabsorption eingesetzt wird, nicht von Anfang an in flüssigem Zustand bereitgestellt sondern in gasförmigem Zustand dem Niederdruckdemethanizer entnommen, dann in gasförmigem Zustand auf das erste Druckniveau verdichtet und schließlich abgekühlt und dadurch verflüssigt. Wie erwähnt wird dieses Fluid, d.h. das Fluid, das dem Niederdruckdemethanizer auf den zweiten Druckniveau entnommen, in gasförmigem Zustand auf das erste Druckniveau verdichtet und dann gekühlt wird, nur auf das dritte Temperaturniveau gekühlt. Dies ist möglich, weil dieses Fluid auf das erste Temperaturniveau verdichtet wird und daher auf einem deutlich höheren Temperaturniveau, d.h. dem dritten Temperaturniveau, verflüssigt werden kann. Das dritte Temperaturniveau ist das Temperaturniveau, auf das auch das Restgas abgekühlt wird und auf dem dieses der Gegenstromabsorption zugeführt wird. Daher ist entsprechend der vorliegenden Erfindung keine weitere Kühlung, d.h. keine Kühlung unterhalb des dritten Temperaturniveaus, erforderlich, um einen flüssigen Rücklauf für die Gegenstromabsorption bereitzustellen.

Im Gegensatz zu Verfahren, wie sie oben beschrieben wurden und auch im Stand der Technik, z.B. in der CN 103449950 A offenbart sind, bei welchen ein Fluid, das als Absorptionsflüssigkeit für die Gegenstromabsorption verwendet wird, auf ein Temperaturniveau deutlich unter jenes, auf das das Restgas abgekühlt und der Gegenstromabsorption zugeführt wird, gekühlt wird, um verflüssigt zu werden, ist gemäß der vorliegenden Erfindung keine Expansionskühlung großer Gasvolumina erforderlich. Dies erlaubt es, auf entsprechende drehende Apparate zu verzichten, die aus den obigen Gründen als nachteilig angesehen werden. Entsprechend der vorliegenden Erfindung muss (im Gegensatz zu den großen Volumina an Fluid, die im Stand der Technik entspannt werden), nur eine relative kleine Menge an Fluid verdichtet werden. Ein hierfür verwendeter Verdichter kann daher mit deutlich geringeren Kosten bereitgestellt warden (im Vergleich zu den im Stand der Technik erforderlichen Expandern). Ferner müssen gemäß der vorliegenden Erfindung kleinere Fluidmengen rückverdichtet werden, wenn diese Fluide später auf einem höheren Druckniveau als jenem, auf das sie entspannt wurden, verwendet werden sollen.

Im Gegensatz zu den zuvor erwähnten und unter Bezugnahme auf die Figur 1 erläuterten Verfahren des Standes der Technik wird im Rahmen der vorliegenden Erfindung also eine absorptive Reinigung eines Restgases, das nach dem Abkühlen auf das dritte Temperaturniveau gasförmig verbleibt, nicht auf dem Druck des Niederdruckdemthanizers durchgeführt, sondern auf einem höheren Druck, nämlich dem Druck bei dem die Abkühlung und Kondensation des Einsatzgemischs erfolgt. Dies ermöglicht es, das einem entsprechenden Gegenstromabsorptionsverfahren entnommene, an Wasserstoff und Methan reiche Kopfgas auf dem ersten Druckniveau, bei dem es ohne weitere Verdichtung der Druckwechseladsorption zugeführt werden kann, aus einer entsprechenden Anlage auszuführen. Eine Nachverdichtung und damit ein Betrieb aufwendiger und energieintensiver Verdichter sind nicht erforderlich. Einer Verdichtung muss im Rahmen der vorliegenden Erfindung lediglich das in dem Niederdruckdemethanizer auf dem zweiten Druckniveau entnommene Fluid unterworfen werden. Da es sich hierbei jedoch um eine vergleichsweise geringe Menge handelt, kann ein entsprechender Verdichter mit vergleichsweise geringem Energieaufwand betrieben werden. Die vorliegende Erfindung ermöglicht damit die Bereitstellung von reinem bzw. hochreinem Wasserstoff aus einem entsprechenden Einsatzgemisch in wirtschaftlich effizienter und kostengünstiger Weise.

Die vorliegende Erfindung eignet sich dabei grundsätzlich für unterschiedliche Verfahren, deren spezifische Ausgestaltung insbesondere vom Methangehalt des gasförmigen Einsatzgemischs abhängt. Unterschiedliche Methangehalte richten sich insbesondere nach der Herkunft eines entsprechenden Einsatzgemischs. Wie grundsätzlich bekannt, sind in entsprechenden Einsatzgemischen, die aus Dampfspaltverfahren stammen, bei denen Ethan oder ethanreiche Einsätze verwendet werden, deutlich methanärmer als Einsatzgemische, die aus Dampfspaltverfahren stammen, in denen flüssige Einsätze und/oder Propan gespalten werden.

Die vorliegende Erfindung kann dabei vorteilhaft für Einsatzgemische eingesetzt werden, die 55 bis 90 Molprozent, insbesondere 60 bis 90 Molprozent, Methan enthalten, also einen vergleichsweisen hohen Methananteil, der zur Bildung eines Rücklaufs in der Gegenstromabsorption ausreicht, wie nachfolgend erläutert.

In diesem Fall wird das dem Niederdruckdemathanizer entnommene und bei der Gegenstromabsorption verwendete Fluid, das überwiegend oder ausschließlich Methan enthält, als flüssiger Rücklauf, und zwar ggf. auch als einziger flüssiger Rücklauf, bei der Gegenstromabsorption eingesetzt. Derartiges Methan, das vorteilhafterweise nur sehr geringe Mengen an Kohlenwasserstoffen mit zwei Kohlenstoffatomen enthält, wird dabei in ausreichender Menge gebildet, um sämtliche Kohlenwasserstoffe mit zwei Kohlenstoffatomen aus dem Restgas, das der Gegenstromabsorption unterworfen wird, auszuwaschen bzw. zu absorbieren. Eine derartige Konstellation erlaubt eine besonders einfache und kostengünstige Erstellung einer entsprechenden Anlage.

Das Verfahren der vorliegenden Erfindung entfaltet jedoch auch besondere Vorteile in Fällen, in denen das Einsatzgemisch nur 40 bis 55 Molprozent, insbesondere 40 bis 50 Molprozent, Methan enthält, also einen geringen Methananteil, der zur Bildung eines Rücklaufs in der Gegenstromabsorption nicht ausreicht, um sämtliche Kohlenwasserstoffe mit zwei Kohlenstoffatomen aus dem Restgas auszuwaschen.

In diesem Fall ist festzustellen, dass das dem Niederdruckdemethanizer entnommene und bei der Gegenstromabsorption verwendete Fluid Methan, jedoch auch beträchtliche Ethylen enthält, so dass es im Rahmen der vorliegenden Erfindung vorteilhafterweise in der Gegenstromabsorption zumindest teilweise von Ethylen befreit wird. Dieses Ethylen geht daher nicht verloren, sondern kann in anschließenden Verfahrensschritten, beispielsweise zur Abtrennung von Ethylen von Ethan, zugeführt werden.

Vorteilhafterweise wird in solchen Fällen bei der Gegenstromabsorption ein ethanreicher Rücklauf eingesetzt, mittels dessen Kohlenwasserstoffe mit zwei Kohlenstoffatomen sowohl aus dem Fluid des Restgases als auch aus dem dem Niederdruckdemethanizer entnommenen und bei der Gegenstromabsorption verwendeten Fluid ausgewaschen werden. Ein derartiges ethanreiches Fluid enthält vorteilhafterweise überwiegend oder ausschließlich Ethan. Es kann beispielsweise aus einer Sumpfflüssigkeit des Niederdruckdemethanizers abgetrennt werden, insbesondere in einem dem Niederdruckdemethanizer nachgeordneten, sogenannten C2-Splitter. Der ethanreiche Strom wird, falls er nicht bereits auf einem ausreichenden Druckniveau vorliegt, mittels einer Pumpe auf das erste Druckniveau gebracht und kann direkt in flüssiger Form, nach Abkühlen auf das dritte Temperaturniveau, in einem entsprechenden Gegenstromabsorptionsverfahren eingesetzt werden. Die vorliegende Erfindung erweist sich auch als besonders vorteilhaft, wenn eine geeignete externe Quelle für druckbeaufschlagtes, gegebenenfalls verflüssigtes, Ethan, vorhanden ist, beispielsweise ethanreiches Erdgas oder Schiefergas, aus dem Ethan einfach abgetrennt werden kann.

Wird ein entsprechender ethanreicher Strom aus einer Sumpfflüssigkeit des Niederdruckdemethanizers gebildet, wie erwähnt beispielsweise in einem sogenannten C2-Splitter, erweist sich das Verfahren als vorteilhaft, obwohl hierbei eine gewisse Menge an Ethan aus einem derartigen C2-Splitter zurückgeführt wird und damit der zuvor investierte Trennaufwand verloren geht. Dies ist deshalb der Fall, weil als Rücklauf auch in der Gegenstromabsorption nur vergleichsweise geringe Mengen an Ethan erforderlich sind, die die Gesamteffizienz einer entsprechenden Anlage nur geringfügig verschlechtern.

Als besonders vorteilhaft erweist es sich, wenn die Gegenstromabsorption unter Verwendung einer zweiteiligen Trenneinheit mit einem ersten Absorptionsabschnitt und einem zweiten Absorptionsabschnitt durchgeführt wird, wobei das Fluid des Restgases in einen unteren Bereich des ersten Absorptionsabschnitts und das dem Niederdruckdemethanizer entnommene Fluid in einen oberen Bereich des ersten Absorptionsabschnitt eingespeist wird. Gas wird aus einem oberen Bereich des ersten Absorptionsabschnitts in einen unteren Bereich des zweiten Absorptionsabschnitts überführt und der ethanreiche Rücklauf wird in einen oberen Bereich des zweiten Absorptionsabschnitts eingespeist. Da aus dem Restgas noch vergleichsweise große Mengen an Kohlenwasserstoffen mit zwei Kohlenstoffatomen auszuwaschen sind, aus dem dem Niederdruckdemethanizer entnommenen Fluid aber vergleichsweise geringere Mengen, erweist sich eine derartige Anordnung als besonders vorteilhaft. Durch den ethanreichen Rücklauf können auf diese Weise sukzessive Kohlenwasserstoffe mit zwei Kohlenstoffatomen aufgenommen werden, die Konzentration entsprechender Verbindungen verringert sich zunehmend in Richtung des oberen Bereichs des zweiten Absorptionsabschnitts. Letztlich kann dem oberen Bereich des zweiten Absorptionsabschnitts auf diese Weise ein Kopfgas entnommen werden, das weitgehend oder auch vollständig frei von Kohlenwasserstoffen mit zwei Kohlenstoffatomen ist.

Als besonders vorteilhaft erweist es sich, wenn die zweiteilige Trenneinheit als zweiteilig ausgebildete Absorptionskolonne ausgebildet ist, in der der erste Absorptionsabschnitt unterhalb des zweiten Absorptionsabschnitts in einer gemeinsamen Außenhülle angeordnet ist. Mit einer derartigen Anordnung der beiden Abschnitte übereinander kann auf aufwendige Pumpen und Leitungen zur Überführung der genannten Ströme verzichtet werden.

Eine weitere Ausgestaltung des erfindungsgemäßen Verfahrens umfasst, dass das Fluid des Restgases vor der Druckwechseladsorption an Wasserstoff angereichert und an Methan abgereichert wird, was insbesondere die Effizienz bzw. Ausbeute bei der Druckwechseladsorption verbessert und damit den Verlust von Wasserstoff verringert.

Besonders von Vorteil ist es dabei, wenn das Fluid des Restgases durch weiteres Abkühlen und Abscheiden einer mehr Methan als Wasserstoff enthaltenen Flüssigkeit aus dem Fluid des Restgases an Wasserstoff angereichert und an Methan abgereichert wird. Ein derartiges weiteres Abkühlen kann beispielsweise unter Verwendung eines weiteren Wärmetauschers erfolgen, in dem entsprechendes Fluid auf eine Temperatur von ca. -152 °C abgekühlt wird. Diese Temperatur liegt bei den verwendeten Drücken deutlich unterhalb Taupunkts von Methan, so dass dieses bevorzugt in die Flüssigphase übergeht.

Im Rahmen der vorliegenden Erfindung werden vorteilhafterweise Temperaturniveaus der zuvor erläuterten Art eingesetzt, wobei das erste Temperaturniveau bei -35 bis -57 °C und/oder das zweite Temperaturniveau bei -60 bis -80 °C und/oder das dritte Temperaturniveau bei -95 bis -100 °C, insbesondere bei -97 bis -99 °C, liegt. Entsprechende Temperaturniveaus können mit Ethylen als Kältemittel bereitgestellt werden, welches in einem entsprechenden Verfahren selbst erzeugt werden kann.

Vorteilhafte Druckniveaus umfassen im Rahmen der vorliegenden Erfindung 20 bis 35 bar für das erste Druckniveau, insbesondere 27 bis 29 bar, und/oder 10 bis 25 bar für das zweite Druckniveau, insbesondere 12 bis 15 bar. Das zweite Druckniveau liegt dabei unterhalb des ersten. Dies ermöglicht den Einsatz eines Niederdruckdemethanizers, was die eingangs erläuterten Vorteile bietet.

Eine Anlage zur Gewinnung von Wasserstoff ist ebenfalls Gegenstand der Erfindung. Eine derartige Anlage umfasst sämtliche Mittel, die sie zur Durchführung eines Verfahrens, wie es zuvor erläutert wurde, befähigen. Zu Details sei auf den entsprechenden unabhängigen Patentanspruch verwiesen. Eine derartige Anlage profitiert von sämtlichen Vorteilen, die zuvor erläutert wurden, und auf die daher ausdrücklich Bezug genommen wird.

Insbesondere umfasst eine derartige Anlage zur Durchführung der Gegenstromabsorption eine zweiteilige Trenneinheit mit einem ersten Absorptionsabschnitt und einem zweiten Absorptionsabschnitt, insbesondere dann, wenn eine derartige Anlage zur Bearbeitung eines vergleichsweise methanarmen Einsatzgemischs ausgebildet ist.

Bevorzugte Ausführungsformen der Erfindung werden nachfolgend unter Bezugnahme auf die beigefügten Figuren gegenüber dem Stand der Technik näher erläutert Kurze Beschreibung der Zeichnungen
Figur 1 veranschaulicht ein nicht erfindungsgemäßes Verfahren in Form eines schematischen Prozessflussdiagramms.
Figur 2 veranschaulicht ein Verfahren gemäß einer Ausführungsform der Erfindung in Form eines schematischen Prozessflussdiagramms.
Figur 3 veranschaulicht Verfahren gemäß einer Ausführungsform der Erfindung in Form eines schematischen Prozessflussdiagramms.

In den Figuren sind einander entsprechende Elemente mit identischen Bezugszeichen angegeben und werden der Übersichtlichkeit halber nicht wiederholt erläutert.

### Ausführliche Beschreibung der Zeichnungen

In Figur 1 ist ein nicht erfindungsgemäßes Verfahren zur Gewinnung von Wasserstoff aus einem Wasserstoff, Methan und Kohlenwasserstoffe mit zwei Kohlenstoffatomen enthaltenden Einsatzgemisch, das arm an oder frei von sonstigen Kohlenwasserstoffen ist, in Form eines schematischen Prozessflussdiagramms veranschaulicht und insgesamt mit 300 bezeichnet.

Das Einsatzgemisch, das Wasserstoff, Methan und Kohlenwasserstoffe mit zwei Kohlenstoffatomen enthält und arm an oder frei von sonstigen Komponenten ist, wird im dargestellten Beispiel in Form eines Stroms a warmseitig einem Wärmetauscher 1, der entgegen dem veranschaulichten Beispiel auch in Form mehrerer Wärmetauscher, Wärmetauscherabschnitte oder -blöcke ausgebildet sein kann, zugeführt.

Der Wärmetauscher 1 kann beispielsweise mit C2-Kältemitteln wie Ethylen in Form der Ströme x, y und z betrieben werden, wobei der Strom x beispielsweise auf einer Temperatur von -57 °C, der Strom y beispielsweise bei einer Temperatur von -80 °C und der Strom z beispielsweise bei einer Temperatur von -100 °C bereitgestellt wird.

Nach der Entnahme aus dem Wärmetauscher 1 auf einem Zwischentemperaturniveau wird der Strom a in einen ersten Abscheidebehälter 2 eingespeist. Aufgrund der Abkühkung in dem Wärmetauscher 1 scheidet sich in dem ersten Abscheidebehälter 2 ein flüssiges Kondensat ab, das in Form eines flüssigen Kondensatstroms b entnommen werden kann. Nicht kondensiertes Fluid des Stroms a wird in Form des Stroms c erneut durch den Wärmetauscher 1 geführt, dort weiter abgekühlt und schließlich in einen zweiten Abscheidebehälter 3 eingespeist. Auch dem zweiten Abscheidebehälter 3 wird ein flüssiger Kondensatstrom, hier mit d bezeichnet, und ein gasförmiger Strom, hier mit e bezeichnet, entnommen. Der Strom e wird erneut in dem Wärmetauscher 1 abgekühlt und anschließend einem dritten Abscheidebehälter, der hier mit 101 bezeichnet ist, zugeführt.

Ein dem dritten Abscheidebehälter 101 entnommener, flüssiger Kondensatstrom r wird, zusammen mit den flüssigen Kondensatströmen b und d aus dem ersten Abscheidebehälter 2 und dem zweiten Abscheidebehälter 3, in eine Trenneinheit 110 überführt, die sich aus einem Demethanizerabschnitt 111 und einem Absorptionsabschnitt 112 zusammensetzt. Sowohl der Demethanizerabschnitt 111 als auch der Absorptionsteil 112 werden bei den für einen Niederdruckdemethanizer üblichen Drücken, im dargestellten Beispiel beispielsweise bei 12 bis 14 bar, betrieben.

Der Demethanizerabschnitt 111 wird mit einem Sumpfverdampfer 113 betrieben, in dem beispielsweise Ethylen als Wärmemedium eingesetzt werden kann. Aus einen Sumpf des Demethanizerabschnitts 111 kann ein Strom f abgezogen werden, der überwiegend Kohlenwasserstoffe mit zwei Kohlenstoffatomen enthält und arm an oder frei von übrigen Komponenten ist. Vom Kopf des Demethanizerabschnitts wird ein Strom s abgezogen, in einem weiteren Wärmetauscher 102 verflüssigt und als Rücklauf auf den Absorptionsabschnitt 112 aufgegeben.

In den Absorptionsabschnitt 112 wird ferner ein Strom t als Rücklauf eingespeist, der dem dritten Abscheidebehälter 101 gasförmig entnommen und in einem Turboexpander 103 entspannt wurde. Durch den Einsatz des Rücklaufs in Form des Stroms s können aus dem Strom t verbleibende Kohlenwasserstoffe mit zwei Kohlenstoffatomen, die in dem dritten Abscheidebehälter 101 nicht in die Flüssigphase und damit in den Strom r übergegangen sind, abgeschieden werden. In diesem Zusammenhang kommt ferner ein Strom u zum Einsatz, der den Absorptionsabschnitt 112 kopfseitig entnommen, ebenfalls in dem Wärmetauscher 102 verflüssigt und anschließend in einem oberen Bereich der Trenneinheit 110 eingespeist wird.

Um eine Verflüssigung der Ströme s und u zu ermöglichen, sind beträchtliche Kältemengen erforderlich, die nur durch den Einsatz eines Turboexpanders 104, der einen aus dem oberen Bereich der Trenneinheit 110 abgezogenen Strom v entspannt, bereitgestellt werden können. Durch die Entspannung des Stroms v liegt dieser Strom, aus dem Wasserstoff gewonnen werden soll, jedoch anschließend bei einem Druck vor, der nochmals deutlich unterhalb des Drucks liegt, bei dem die Trenneinheit 110 betrieben wird.

Zur Gewinnung von Reinwasserstoff, wozu eine Druckwechseladsorption 9 vorgesehen ist, ist es daher erforderlich, den Strom v in einer oder mehrerer Verdichterstufen 106 erneut zu verdichten. Zuvor wird eine Vorkühlung 107 vorgenommen. Wie mehrfach erwähnt, erweist sich inbesondere der Betrieb der Verdichterstufe(n) 106 als ausgesprochen energieaufwendig bzw. auch hinsichtlich der Wartbarkeit entsprechender Anlagen als problematisch.

Bei der Druckwechseladsorption 9 werden aus dem Strom v ein wasserstoffreicher Produktstrom I und ein sogenannter Tailgasstrom m gewonnen. Der Tailgasstrom m, der vorteilhafterweise im Wesentlichen das sämtliche Methan der Ströme a bzw. v und geringere Mengen an Wasserstoff enthält, wird in einem Verdichter 10 auf einen geeigneten Druck, beispielsweise auf einen Druck, der zum Einsatz in einer Feuerung erforderlich ist, verdichtet und ebenfalls abgegeben.

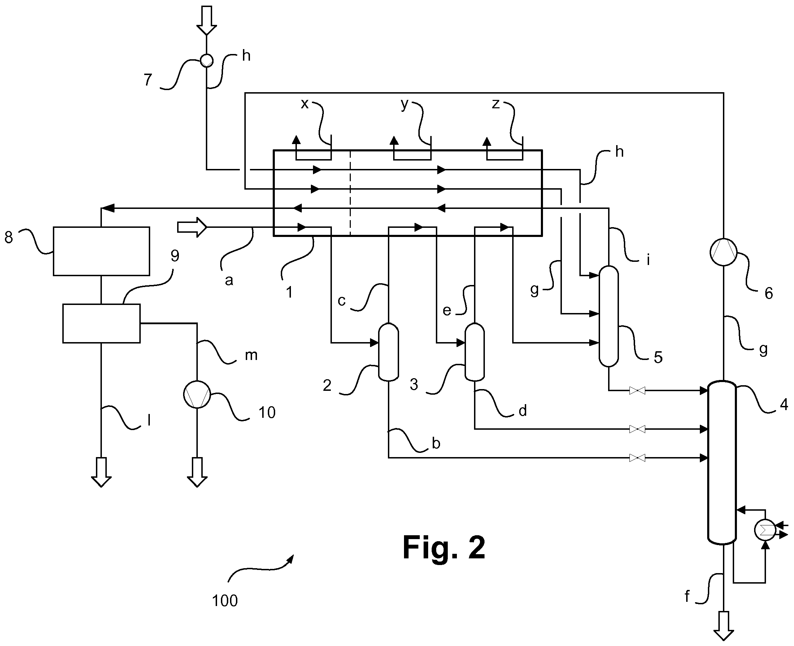

In Figur 2 ist ein Verfahren gemäß einer Ausführungsform der Erfindung in Form eines schematischen Prozessflussdiagramms veranschaulicht und insgesamt mit 100 bezeichnet.

Im Gegensatz zu dem in Figur 1 veranschaulichten Verfahren 300 werden in dem Verfahren 100, das in Figur 2 veranschaulicht ist, lediglich zwei Abscheidebehälter 2 und 3 eingesetzt. Der vom Kopf des zweiten Abscheidebehälters 3 gasförmig abgezogene Strom e wird hier in eine mit 5 bezeichnete Trenneinheit eingespeist, deren Betrieb nachfolgend erläutert wird.

Wie die flüssigen Kondensatströme b, d und r gemäß dem in Figur 1 veranschaulichten Verfahren 300 werden auch in dem in Figur 2 veranschaulichten Verfahren 100 die flüssigen Kondensatströme b und d in eine entsprechende Trenneinheit überführt, die hier mit 4 bezeichnet ist. Im Gegensatz zu der Trenneinheit 110 gemäß dem in Figur 1 veranschaulichten Verfahren 300 handelt es sich bei der Trenneinheit 4 gemäß dem in Figur 2 veranschaulichten Verfahren 100 um eine reine Destillationssäule, also funktionell um einen dem Demethanizerabschnitt 111 der Trenneinheit 110 entsprechenden Apparat. Ein Sumpfverdampfer der Trenneinheit 4 (hier ohne Bezeichnung) kann wie der Sumpfverfampfer 113 der Trenneinheit 110 gemäß dem Verfahren 300, das in Figur 1 dargestellt ist, beispielsweise mit Ethylen beheizt werden. Auch hier wird aus dem Sumpf der Trenneinheit 4 ein entsprechender Strom f abgezogen, der überwiegend oder ausschließlich Kohlenwasserstoffe mit zwei Kohlenstoffatomen enthält.

Vom Kopf der Trenneinheit 4, die als Niederdruckdemethanizer ausgebildet ist, wird ein mit g bezeichneter Strom abgezogen, in gasförmigem Zustand in einem Verdichter 6 verdichtet und anschließend in dem Wärmetauscher 1 abgekühlt. Durch die genannte Verdichtung erreicht das Fluid des Stroms g, das stromauf des Verdichters 6 bei dem Druck des Niederdruckdemethanizers 4 vorliegt und auf diesem Druck bei den Temperaturen des Wärmetauschers 1 nicht verflüssigbar wäre, einen zur Verflüssigung ausreichenden Druck. Daher ist, im Gegensatz zum Stand der Technik, keine Entspannung großer Fluidvolumina erforderlich, um Temperaturniveaus bereitstellen zu können als jene, die der Wärmetauscher 1 bereitzustellen in der Lage ist. Bezüglich der Vorteile hiervon wird auf die obigen Erläuterungen verwiesen. Nach der Abkühlung in dem Wärmetauscher 1 auf eine Temperatur von ca. -98 °C wird auch der Strom g in die Trenneinheit 5 eingespeist.

Werden in dem in Figur 2 veranschaulichten Verfahren 100 in dem Strom a vergleichsweise geringe Mengen an Methan und vergleichsweise große Mengen an Wasserstoff bereitgestellt, weil der Strom a beispielsweise aus einer Dampfspaltung von überwiegend Ethan enthaltenden Einsätzen stammt, so enthält der Strom g vergleichsweise große Mengen an Ethylen, jedoch vergleichsweise wenig Methan. Bei der ausschließlichen Einspeisung des Stroms g in die Trenneinheit 5 bestünde daher die Gefahr vergleichsweise hoher Verluste an Ethylen in einen Kopfstrom i, der kopfseitig der Trenneinheit 5 entnommen wird.

Daher wird gemäß dem Verfahren 100, das in Figur 2 veranschaulicht ist, auf die Trenneinheit 5 auch ein Rücklaufstrom h aufgegeben, der überwiegend oder ausschließlich Ethan aufweist und in den Wärmetauscher 1 auf das dritte Temperaturniveau abgekühlt wurde. Ein entsprechender Strom h kann beispielsweise einem C2-Splitter entnommen werden, dem der Strom f zugeführt wird, oder es kann sie bei dem Strom h zumindest teilweise um extern zugeführtes Ethan handeln. Der Strom h wird, wenn er nicht ohnehin bereits auf einem ausreichenden Druck zum Einsatz in der Trenneinheit 5 vorliegt, mittels einer Pumpe 7 druckerhöht.

Durch den erläuterten Betrieb der Trenneinheit 5 kann das Ethylen des Stroms g, das in der Trenneinheit 5 zumindest teilweise in die Gasphase übergeht, rückgewaschen werden, so dass Ethylenverluste in dem Strom i verringert werden.

Der Strom i besteht damit noch überwiegend oder ausschließlich aus Methan und Wasserstoff. Er wird in dem Wärmetauscher 1 erwärmt und ohne erneute Druckbeaufschlagung einer Erwärmung in einer Einheit 8 auf ca. 20 bis 25 °C unterworfen. Der Strom i wird anschließend der Druckwechseladsorption 9 zugeführt, in welcher die bereits unter Bezugnahme auf das Verfahren 300, das in Figur 1 veranschaulicht ist, erläuterten Ströme I und m gebildet werden.

Das in Figur 2 veranschaulichte Verfahren 100 erweist sich als besonders vorteilhaft, weil hier im Gegensatz zu der Rückverdichtung des Stroms v, wie sie gemäß dem Verfahren 300, das in Figur 1 veranschaulicht ist, erfolgen muss, eine derartige Rückverdichtung nicht erforderlich ist. Dies ist insbesondere darauf zurückzuführen, dass keine zusätzliche Kälte zur Verflüssigung eines Kopfstroms g der Trenneinheit 4 erfolgen muss (im Gegensatz zu den Strömen s und u des Verfahrens 300, das in Figur 1 veranschaulicht ist). Der Strom i liegt gemäß Figur 2 bereits auf einem Druck vor, der sich zum Einsatz in der Druckwechseladsorption 9 eignet. Der Kopfstrom der Trenneinheit 4 muss lediglich in relativ geringer Menge mittels des (Kalt-)Verdichters 6 verdichtet werden. Dessen Betrieb erweist sich als bedeutend günstiger, weil in diesem deutlich geringere Mengen zu verdichten sind. Ferner wird im dargestellten Beispiel durch den Einsatz des Stroms h ein weiteres Absorptionsmedium bereitgestellt, das ebenfalls keine zusätzliche Kälte zu seiner Herstellung in dem Verfahren 100 benötigt.

Wenngleich in Figur 2 ein Verfahren 100 gezeigt ist, bei dem ein Strom h zum Einsatz kommt, welcher überwiegend oder ausschließlich Ethan enthält, kann es in bestimmten Fällen auch ausreichend sein, lediglich die Ströme e und g in die Trenneinheit 5 einzuspeisen. Dies ist insbesondere dann der Fall, wenn der Strom a ausreichende Mengen an Methan aufweist, die zu einer Rückwaschung von Ethylen in der Trenneinheit 5 ausreichen. Dies ist insbesondere dann der Fall, wenn der Strom a aus einer Dampfspaltung von flüssigen Einsätzen oder gasförmigen Einsätzen wie Propan oder kombinierten Einsätzen (aus beispielsweise Naphtha, Ethan und LPG) stammt. In diesem Fall reicht der Methangehalt des Stroms g aus, um eine ausreichende Rückwaschung von Kohlenwasserstoff mit zwei Kohlenstoffatomen in der Trenneinheit 5 auch ohne den zusätzlichen Einsatz des Stroms h zu bewirken.

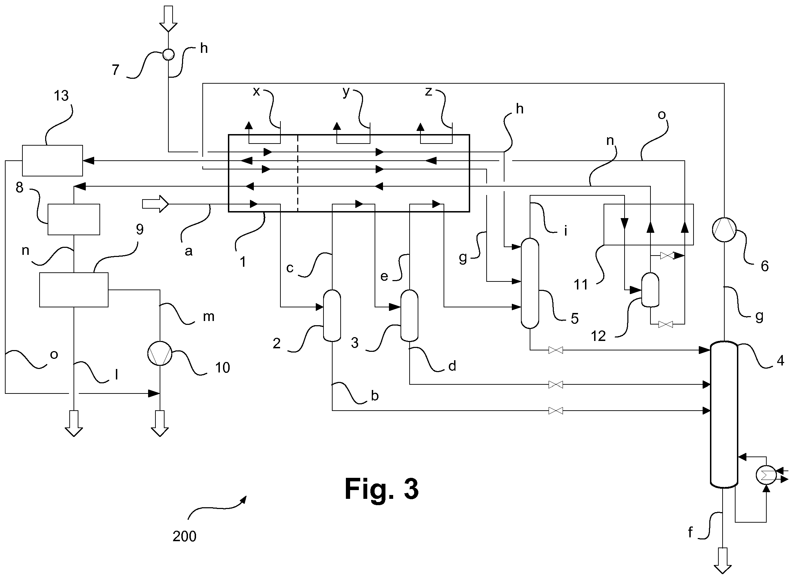

In Figur 3 ist eine Variante des in Figur 2 veranschaulichten Verfahrens 100 veranschaulicht und insgesamt mit 200 bezeichnet. Es handelt sich um ein Verfahren gemäß einer weiteren Ausführungsform der Erfindung.

Im Gegensatz zu dem Verfahren 100, das in Figur 2 veranschaulicht ist, wird hier der Strom i durch einen weiteren Wärmetauscher 11 geführt und dort auf eine Temperatur von beispielsweise ca. -152 °C abgekühlt. Anschließend wird der Strom i, der durch die Abkühlung in dem weiteren Wärmetauscher 11 zumindest teilweise verflüssigt wurde, in einen Abscheidebehälter 12 überführt, aus dessen Sumpf ein an Methan an- und an Wasserstoff abgereicherter Strom o und von dessen Kopf ein an Wasserstoff an- und an Methan abgereicherter Strom n entnommen wird. Beide Ströme werden in den Wärmetauscher 1 erwärmt, wobei der Strom n behandelt wird, wie der Strom i in dem Verfahren 100, das in Figur 2 veranschaulicht ist. Durch die bereits beträchtliche Anreicherung des Stroms n mit Wasserstoff kann dieser in der Druckwechselabsorption 9 mit deutlich besseren Ausbeuten behandelt werden, sodass sich die Herstellung von Reinwasserstoff in Form des Stroms I einfacher gestaltet. Der Strom o wird nach der Erwärmung in dem Wärmetauscher 1 in einer Einheit 13 weiter abgekühlt und stromab des Verdichters 10 mit dem Strom m vereinigt.

## Patentansprüche

1. Verfahren (100, 200) zur Gewinnung von Wasserstoff aus einem Wasserstoff, Methan und Kohlenwasserstoffe mit zwei Kohlenstoffatomen enthaltenden und an sonstigen Kohlenwasserstoffen armen oder freien Einsatzgemisch, bei dem
- Fluid des Einsatzgemischs auf einem ersten Druckniveau von einem ersten Temperaturniveau auf ein zweites Temperaturniveau abgekühlt wird, wobei unter Verbleib eines Restgases ein oder mehrere Kondensate aus dem Fluid des Einsatzgemischs abgeschieden werden,
- Fluid des Restgases weiter auf ein drittes Temperaturniveau abgekühlt wird und unter Erhalt eines an Wasserstoff und Methan reichen Kopfgases und einer Sumpfflüssigkeit einer Gegenstromabsorption unterworfen wird,
- Fluid des Kopfgases erwärmt und auf dem ersten Druckniveau unter Bildung eines an Wasserstoff reichen und an Methan armen oder freien Produktstroms einer Druckwechseladsorption (9) unterworfen wird, und
- Fluid des oder der Kondensate und/oder der Sumpfflüssigkeit von dem ersten Druckniveau auf ein zweites Druckniveau entspannt und auf dem zweiten Druckniveau einem Niederdruckdemethanizer zugeführt wird,
**dadurch gekennzeichnet, dass**
die Gegenstromabsorption auf dem ersten Druckniveau unter Verwendung von Fluid durchgeführt wird, das dem Niederdruckdemethanizer auf dem zweiten Druckniveau entnommen, in gasförmigem Zustand auf das erste Druckniveau verdichtet und auf das dritte Temperaturniveau abgekühlt wird.

2. Verfahren (100, 200) nach Anspruch 1, bei dem das Einsatzgemisch 55 bis 90, insbesondere 60 bis 90, Molprozent Methan enthält.

3. Verfahren (100, 200) nach Anspruch 2, bei dem das dem Niederdruckdemethanizer entnommene und bei der Gegenstromabsorption verwendete Fluid überwiegend oder ausschließlich Methan enthält und als flüssiger Rücklauf bei der Gegenstromabsorption eingesetzt wird.

4. Verfahren (100, 200) nach Anspruch 1, bei dem das Einsatzgemisch 30 bis 55, insbesondere 30 bis 40, Molprozent Methan enthält.

5. Verfahren (100, 200) nach Anspruch 4, bei dem das dem Niederdruckdemethanizer entnommene und bei der Gegenstromabsorption verwendete Fluid Methan und Ethylen enthält und in der Gegenstromabsorption zumindest teilweise von dem Ethylen befreit wird.

6. Verfahren (100, 200) nach Anspruch 4, bei dem bei der Gegenstromabsorption ein ethanreicher Rücklauf eingesetzt wird, mittels dessen Kohlenwasserstoffe mit zwei Kohlenstoffatomen sowohl aus dem Fluid des Restgases als auch aus dem dem Niederdruckdemethanizer entnommenen und bei der Gegenstromabsorption verwendeten Fluid ausgewaschen werden.

7. Verfahren (100, 200) nach Anspruch 6, bei der die Gegenstromabsorption unter Verwendung einer zweiteiligen Trenneinheit mit einem ersten Absorptionsabschnitt und einem zweiten Absorptionsabschnitt durchgeführt wird, wobei das Fluid des Restgases in einen unteren Bereich des ersten Absorptionsabschnitts und das dem Niederdruckdemethanizer entnommene Fluid in einen oberen Bereich des ersten Absorptionsabschnitts eingespeist wird, wobei ein Gas aus einem oberen Bereich des ersten Absorptionsabschnitts in einen unteren Bereich des zweiten Absorptionsabschnitts überführt und der ethanreiche Rücklauf in einen oberen Bereich des zweiten Absorptionsabschnitts eingespeist wird.

8. Verfahren (100, 200) nach Anspruch 7, bei dem die zweiteilige Trenneinheit als zweiteilig ausgebildete Absorptionskolonne (5) ausgebildet ist, in der der erste Absorptionsabschnitt unterhalb des zweiten Absorptionsabschnitts in einer gemeinsamen Außenhülle angeordnet ist.

9. Verfahren (100, 200) nach einem der vorstehenden Ansprüche, bei dem das Fluid des Restgases vor der Druckwechseladsorption (9) an Wasserstoff angereichert und an Methan abgereichert wird.

10. Verfahren (100, 200) nach Anspruch 9, bei dem das Fluid des Restgases durch weiteres Abkühlen und Abscheiden einer mehr Methan als Wasserstoff enthaltenden Flüssigkeit aus dem Fluid des Restgases an Wasserstoff angereichert und an Methan abgereichert wird.

11. Verfahren (100, 200) nach einem der vorstehenden Ansprüche, bei dem das erste Temperaturniveau bei -35 bis -57 °C und/oder das zweite Temperaturniveau bei - 60 bis -80 °C und/oder das dritte Temperaturniveau bei -95 bis -100 °C, insbesondere bei -97 bis -99 °C, liegt.

12. Verfahren (100, 200) nach einem der vorstehenden Ansprüche, bei dem das erste Druckniveau bei 20 bis 35 bar, insbesondere bei 27 bis 29 bar, und/oder das zweite Druckniveau bei 10 bis 25 bar, insbesondere bei 12 bis 15 bar, liegt.

13. Anlage zur Gewinnung von Wasserstoff aus einem Wasserstoff, Methan und Kohlenwasserstoffe mit zwei Kohlenstoffatomen enthaltenden und an sonstigen Kohlenwasserstoffen armen oder freien Einsatzgemisch, mit Mitteln, die dafür eingerichtet sind,
- Fluid des Einsatzgemischs auf einem ersten Druckniveau derart von einem ersten Temperaturniveau auf ein zweites Temperaturniveau abzukühlen, dass unter Verbleib eines Restgases ein oder mehrere Kondensate aus dem Fluid des Einsatzgemischs abgeschieden werden,
- Fluid des Restgases weiter auf ein drittes Temperaturniveau abzukühlen und unter Erhalt eines an Wasserstoff und Methan reichen Kopfgases und einer Sumpfflüssigkeit einer Gegenstromabsorption zu unterwerfen,
- Fluid des Kopfgases zu erwämen und auf dem ersten Druckniveau unter Bildung eines an Wasserstoff reichen und an Methan armen oder freien Produktstroms einer Druckwechseladsorption (9) zu untwerfen, und
- Fluid des oder der Kondensate und/oder der Sumpfflüssigkeit von dem ersten Druckniveau auf ein zweites Druckniveau zu entspannen und auf dem zweiten Druckniveau einem Niederdruckdemethanizer zuzuführen,
**gekennzeichnet durch**
Mittel, die dafür eingerichtet sind, die Gegenstromabsorption auf dem ersten Druckniveau unter Verwendung von Fluid durchzuführen, das dem Niederdruckdemethanizer auf dem zweiten Druckniveau entnommen, in gasförmigem Zustand auf das erste Druckniveau verdichtet und auf das dritte Temperaturniveau abgekühlt wird.

14. Anlage nach Anspruch 13, die zur Durchführung der Gegenstromabsorption eine zweiteilige Trenneinheit mit einem ersten Absorptionsabschnitt und einem zweiten Absorptionsabschnitt aufweist, wobei Mittel vorgesehen sind, die dafür eingerichtet sind, das Fluid des Restgases in einen unteren Bereich des ersten Absorptionsabschnitts und das dem Niederdruckdemethanizer entnommene Fluid in einen oberen Bereich des ersten Absorptionsabschnitts einzuspeisen, Gas aus einem oberen Bereich des ersten Absorptionsabschnitts in einen unteren Bereich des zweiten Absorptionsabschnitts zu überführen, und einen ethanreichen Rücklauf in einen oberen Bereich des zweiten Absorptionsabschnitts einzuspeisen.

15. Anlage nach Anspruch 13 oder 14, die zur Durchführung eines Verfahrens (100, 200) nach einem der Ansprüche 1 bis 12 eingerichtet ist.

## Claims

1. Method (100, 200) for obtaining hydrogen from a feed mixture containing hydrogen, methane and hydrocarbons with two carbon atoms and little or no other hydrocarbons, in which
- fluid of the feed mixture at a first pressure level is cooled from a first temperature level to a second temperature level, wherein one or more condensates are separated from the fluid of the feed mixture while leaving a residual gas,
- fluid of the residual gas is cooled further to a third temperature level and subjected to a countercurrent absorption, thereby obtaining a hydrogen- and methane-rich top gas and a bottom liquid,
- fluid of the top gas is heated and subjected to a pressure swing adsorption (9) at the first pressure level, thereby forming a hydrogen-rich and methane-poor or methane-free product stream, and
- fluid of the condensate or condensates and/or of the bottom liquid is expanded from the first pressure level to a second pressure level and at the second pressure level is fed to a low-pressure demethanizer,
**characterized in that**
the countercurrent absorption is carried out at the first pressure level using fluid which is removed from the low-pressure demethanizer at the second pressure level, compressed to the first pressure level in the gaseous state and cooled to the third temperature level.

2. Method (100, 200) according to Claim 1, in which the feed mixture contains 55 to 90, in particular 60 to 90, mole percent of methane.

3. Method (100, 200) according to Claim 2, in which the fluid removed from the low-pressure demethanizer and used in the countercurrent absorption contains predominantly or exclusively methane and is used as a liquid reflux in the countercurrent absorbtion.

4. Method (100, 200) according to Claim 1, in which the feed mixture contains 30 to 55, in particular 30 to 40, mole percent of methane.

5. Method (100, 200) according to Claim 4, in which the fluid removed from the low-pressure demethanizer and used in the countercurrent absorption contains methane and ethylene and is at least partially freed of the ethylene in the countercurrent absorption.

6. Method (100, 200) according to Claim 4, in which an ethane-rich reflux is used in the countercurrent absorption, by means of which hydrocarbons with two carbon atoms are washed out both from the fluid of the residual gas and from the fluid removed from the low-pressure demethanizer and used in the countercurrent absorption.

7. Method (100, 200) according to Claim 6, in which the countercurrent absorption is carried out using a two-part separating unit with a first absorption section and a second absorption section, wherein the fluid of the residual gas is fed into a lower region of the first absorption section and the fluid removed from the low-pressure demethanizer is fed into an upper region of the first absorption section, wherein a gas from an upper region of the first absorption section is transferred into a lower region of the second absorption section and the ethane-rich reflux is fed into an upper region of the second absorption section.

8. Method (100, 200) according to Claim 7, in which the two-part separating unit is formed as an absorption column (5) formed as two parts, in which the first absorption section is arranged under the second absorption section in a common outer shell.

9. Method (100, 200) according to one of the preceding claims, in which the fluid of the residual gas is enriched with hydrogen and depleted of methane before the pressure swing adsorption (9).

10. Method (100, 200) according to Claim 9, in which the fluid of the residual gas is enriched with hydrogen and depleted of methane by further cooling down and separating a liquid containing more methane than hydrogen from the fluid of the residual gas.

11. Method (100, 200) according to one of the preceding claims, in which the first temperature level is at -35 to -57°C and/or the second temperature level is at - 60 to -80°C and/or the third temperature level is at -95 to -100°C, in particular at -97 to -99°C.

12. Method (100, 200) according to one of the preceding claims, in which the first pressure level is at 20 to 35 bar, in particular at 27 to 29 bar, and/or the second pressure level is at 10 to 25 bar, in particular at 12 to 15 bar.

13. Installation for obtaining hydrogen from a feed mixture containing hydrogen, methane and hydrocarbons with two carbon atoms and little or no other hydrocarbons, with means that are designed for
- cooling fluid of the feed mixture at a first pressure level from a first temperature level to a second temperature level in such a way that one or more condensates are separated from the fluid of the feed mixture while leaving a residual gas,
- cooling fluid of the residual gas further to a third temperature level and subjecting it to a countercurrent absorption, thereby obtaining a hydrogen- and methane-rich top gas and a bottom liquid,
- heating fluid of the top gas and subjecting it to a pressure swing adsorption (9) at the first pressure level, thereby forming a hydrogen-rich and methane-poor or methane-free product stream, and
- expanding fluid of the condensate or condensates and/or of the bottom liquid from the first pressure level to a second pressure level and at the second pressure level feeding it to a low-pressure demethanizer,
**characterized by**
means that are designed for carrying out the countercurrent absorption at the first pressure level using fluid which is removed from the low-pressure demethanizer at the second pressure level, compressed to the first pressure level in the gaseous state and cooled to the third temperature level.

14. Installation according to Claim 13, which for carrying out the countercurrent absorption has a two-part separating unit with a first absorption section and a second absorption section, wherein means are provided that are designed for feeding the fluid of the residual gas into a lower region of the first absorption section and for feeding the fluid removed from the low-pressure demethanizer into an upper region of the first absorption section, for transferring gas from an upper region of the first absorption section into a lower region of the second absorption section and for feeding an ethane-rich reflux into an upper region of the second absorption section.

15. Installation according to Claim 13 or 14, which is designed for carrying out a method (100, 200) according to one of Claims 1 to 12.

## Revendications

1. Procédé (100, 200) de production d'hydrogène à partir d'un mélange de charge contenant de l'hydrogène, du méthane et des hydrocarbures avec deux atomes de carbone et peu ou pas d'autres hydrocarbures, dans lequel
- on refroidit le fluide du mélange de charge à un premier niveau de pression d'un premier niveau de température à un deuxième niveau de température, dans lequel on sépare un ou plusieurs condensat(s) hors du fluide du mélange de charge en laissant subsister un gaz résiduel,
- on refroidit de nouveau le fluide du gaz résiduel à un troisième niveau de température et on le soumet à une absorption à contre-courant avec obtention d'un gaz de tête riche en hydrogène et en méthane et d'un liquide de fond,
- on chauffe le fluide du gaz de tête et on le soumet au premier niveau de pression à une adsorption à pression alternée (9) avec formation d'un courant de produit riche en hydrogène et contenant peu ou pas de méthane, et
- on détend le fluide du ou des condensat (s) et/ou du liquide de fond du premier niveau de pression à un deuxième niveau de pression et on l'envoie au deuxième niveau de pression à un méthaniseur à basse pression,
**caractérisé en ce que** l'on effectue l'absorption à contre-courant au premier niveau de pression avec utilisation de fluide, que l'on prélève au méthaniseur à basse pression au deuxième niveau de pression, que l'on comprime à l'état gazeux au premier niveau de pression et que l'on refroidit au troisième niveau de température.

2. Procédé (100, 200) selon la revendication 1, dans lequel le mélange de charge contient 55 à 90, en particulier 60 à 90, pour cent molaires de méthane.

3. Procédé (100, 200) selon la revendication 2, dans lequel le fluide prélevé au méthaniseur à basse pression et utilisé pour l'absorption à contre-courant contient principalement ou exclusivement du méthane et est utilisé comme retour liquide lors de l'absorption à contre-courant.

4. Procédé (100, 200) selon la revendication 1, dans lequel le mélange de charge contient 30 à 55, en particulier 30 à 40, pour cent molaires de méthane.

5. Procédé (100, 200) selon la revendication 4, dans lequel le fluide prélevé au méthaniseur à basse pression et utilisé pour l'absorption à contre-courant contient du méthane et de l'éthylène et est au moins en partie débarrassé de l'éthylène lors de l'absorption à contre-courant.

6. Procédé (100, 200) selon la revendication 4, dans lequel on utilise lors de l'absorption à contre-courant un retour riche en éthane, au moyen duquel des hydrocarbures avec deux atomes d'hydrogène sont lavés aussi bien hors du fluide du gaz résiduel que hors du fluide prélevé au méthaniseur à basse pression et utilisé lors de l'absorption à contre-courant.

7. Procédé (100, 200) selon la revendication 6, dans lequel on effectue l'absorption à contre-courant en utilisant une unité de séparation en deux parties avec une première section d'absorption et une seconde section d'absorption, dans lequel on introduit le fluide du gaz résiduel dans une région inférieure de la première section d'absorption et le fluide prélevé au méthaniseur à basse pression dans une région supérieure de la première section d'absorption, dans lequel on transfère un gaz d'une région supérieure de la première section d'absorption à une région inférieure de la seconde section d'absorption et on introduit le retour riche en éthane dans une région supérieure de la seconde section d'absorption.

8. Procédé (100, 200) selon la revendication 7, dans lequel l'unité de séparation en deux parties est formée par une colonne d'absorption réalisée en deux parties (5), dans laquelle la première section d'absorption est disposée en dessous de la seconde section d'absorption dans une enveloppe extérieure commune.

9. Procédé (100, 200) selon l'une quelconque des revendications précédentes, dans lequel on enrichit en hydrogène et on appauvrit en méthane le fluide du gaz résiduel avant l'adsorption à pression alternée (9).

10. Procédé (100, 200) selon la revendication 9, dans lequel on enrichit en hydrogène et on appauvrit en méthane le fluide du gaz résiduel par un nouveau refroidissement et une nouvelle séparation d'un liquide contenant plus de méthane que d'hydrogène à partir du fluide du gaz résiduel.

11. Procédé (100, 200) selon l'une quelconque des revendications précédentes, dans lequel le premier niveau de température se situe à -35°C à -57°C et/ou le deuxième niveau de température se situe à -60°C à -80°C et/ou le troisième niveau de température se situe à -95°C à - 100°C, en particulier à -97°C à -99°C.

12. Procédé (100, 200) selon l'une quelconque des revendications précédentes, dans lequel le premier niveau de pression se situe à 20 à 35 bar, en particulier à 27 à 29 bar, et/ou le deuxième niveau de pression se situe à 10 à 25 bar, en particulier à 12 à 15 bar.

13. Installation de production d'hydrogène à partir d'un mélange de charge contenant de l'hydrogène, du méthane et des hydrocarbures avec deux atomes de carbone et peu ou pas d'autres hydrocarbures, dotée de moyens qui sont conçus pour
- refroidir le fluide du mélange de charge à un premier niveau de pression d'un premier niveau de température à un deuxième niveau de température, de telle manière qu'un ou plusieurs condensat(s) soit/soient séparé(s) hors du fluide du mélange de charge en laissant subsister un gaz résiduel,
- refroidir de nouveau le fluide du gaz résiduel à un troisième niveau de température et le soumettre à une absorption à contre-courant avec obtention d'un gaz de tête riche en hydrogène et en méthane et d'un liquide de fond,
- chauffer le fluide du gaz de tête et le soumettre au premier niveau de pression à une adsorption à pression alternée (9) avec formation d'un courant de produit riche en hydrogène et contenant peu ou pas de méthane, et
- détendre le fluide du ou des condensat (s) et/ou du liquide de fond du premier niveau de pression à un deuxième niveau de pression et l'envoyer au deuxième niveau de pression à un méthaniseur à basse pression,
**caractérisé par** des moyens, qui sont conçus pour effectuer l'absorption à contre-courant au premier niveau de pression en utilisant un fluide, que l'on prélève au méthaniseur à basse pression au deuxième niveau de pression, que l'on comprime à l'état gazeux au premier niveau de pression et que l'on refroidit au troisième niveau de température.

14. Installation selon la revendication 13, qui présente pour effectuer l'absorption à contre-courant une unité de séparation en deux parties avec une première section d'absorption et une seconde section d'absorption, dans laquelle il est prévu des moyens qui sont conçus pour introduire le fluide du gaz résiduel dans une région inférieure de la première section d'absorption et le fluide prélevé au méthaniseur à basse pression dans une région supérieure de la première section d'absorption, transférer du gaz d'une région supérieure de la première section d'absorption à une région inférieure de la seconde section d'absorption, et d'introduire un retour riche en éthane dans une région supérieure de la seconde section d'absorption.

15. Installation selon une revendication 13 ou 14, qui est conçue pour la mise en oeuvre d'un procédé (100, 200) selon l'une quelconque des revendications 1 à 12.
